# EUROPÄISCHE PATENTSCHRIFT

(11) **EP 2 196 507 B1**
(45) Veröffentlichungstag und Bekanntmachung des Hinweises auf die Patenterteilung: **13.07.2011**
(21) Anmeldenummer: 09177966.0
(22) Anmeldetag: 04.12.2009
(51) Int. Cl.: C09D 11/00

(54) **Ink Jet Tinte**
Ink jet ink
Encre à jet d'encre

(30) Priorität: 12.12.2008 DE 102008061737
(43) Veröffentlichungstag der Anmeldung: 16.06.2010
(73) Patentinhaber: Evonik Carbon Black GmbH, 63457 Hanau (DE)
(72) Erfinder: Tauber, Gerd, 63500, Seligenstadt (DE); Kalbitz, Werner, 63517, Rodenbach (DE); McIntosh, Ralph, 63457, Hanau (DE); Batz-Sohn, Christoph, 63454, Hanau-Mittelbuchen (DE); Karl, Alfons, 63584, Gründau (DE)

(56) Entgegenhaltungen:
- EP-A- 1 167 470
- WO-A-03/014238
- US-A1- 2004 123 773
- US-A1- 2005 014 864

## Beschreibung

Die Erfindung betrifft eine Ink Jet Tinte, deren Herstellung sowie deren Verwendung.

Aus EP 0 969 052 sind ozonoxidierte Ruße mit einem flüchtigen Gehalt größer 10 Ges.-% und einem CTAB/Iod-Verhältnis größer 2 m²/g bekannt.

Aus EP 1 061 106 sind Ink Jet Tinten enthaltend ein Farbmittel mit funktionellen Gruppen bekannt, wobei Estergruppen 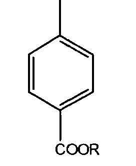 das Ausbluten und die Wasserfestigkeit und 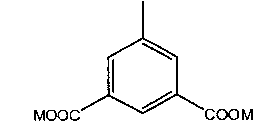 Gruppen die Wasserdispergierbarkeit verbessern.

Ferner sind aus EP 1 061 107 Ink Jet Tinten enthaltend ein Farbmittel mit funktionellen Gruppen bekannt, wobei -R₁-COOM und -Ar-CONHR₁COOM das Ausbluten und die Wasserfestigkeit und 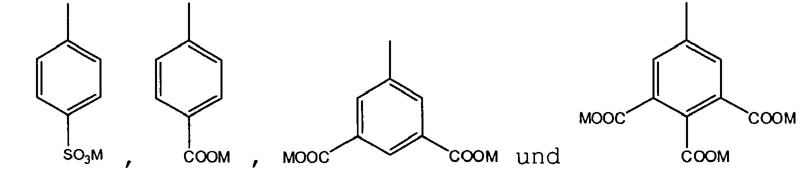 Gruppen die Wasserdispergierbarkeit verbessern.

Aufgabe der Erfindung ist es eine Ink Jet Tinte zur Verfügung zu stellen, die beim Druck ein geringes Ausbluten ("Intercolor Bleeding") zeigt und gleichzeitig eine gute optische Dichte aufweist, wobei die optische Dichte und das Intercolor Bleeding der Tinte durch das Verhältnis des Pigments zu dem oxidierten Ruß gezielt gesteuert werden kann.

Gegenstand der Erfindung ist eine Ink Jet Tinte, welche dadurch gekennzeichnet ist, dass diese mindestens ein Pigment und mindestens einen ozon oxidierten Ruß mit einen Flüchtigengehalt von 10% bis 30% enthält.

Dabei sind Pigment und oxidierter Ruß nicht identisch. Das bedeutet, dass für den Fall, dass das Pigment ein oxidierter Ruß ist, das Pigment und der oxidierte Ruß sich in den physikalisch/chemischen Daten unterscheiden.

Der oxidierte Ruß kann bevorzugt einen Flüchtigengehalt (DIN53552) von 15% bis 25% haben.

Der oxidierte Ruß kann eine BET-Oberfläche (ISO4652) von 5 bis 1100 m²/g, vorzugsweise von 30 bis 700 m²/g, besonders bevorzugt von 50 bis 400 m²/g, haben.

Der oxidierte Ruß kann einen OAN-Wert (ISO4656) von 40 bis 200 ml/100 g, vorzugsweise von 60 bis 180 ml/100 g, besonders bevorzugt von 100 bis 170 ml/100 g, haben.

Der oxidierte Ruß kann einen pH-Wert (ISO787-9) von 1 bis 7, vorzugsweise von 2 bis 5, besonders bevorzugt von 2 bis 4, haben.

Der oxidierte Ruß kann ein oxidierter Gas-, Flamm-, Thermal-, Furnace-, Channel- oder Plasmaruß sein.

Der oxidierte Ruß kann durch Behandlung eines Rußes mit einem Oxidationsmittel, beispielsweise Ammoniumperoxodisulfat, Wasserstoffperoxid, Ozon, Sauerstoff (rein oder als Luft), Kaliumbromat und/oder Natriumperborat, hergestellt werden.

Als Pigment kann Kohlenstoffmaterial oder Buntpigment eingesetzt werden.

Als Buntpigment kann beispielsweise Gelb-, Orange-, Rot-, Magenta-, Violett-, Blau-, Cyan-, Grün- oder Braunpigment, verwendet werden. Vorzugsweise kann als Buntpigment anorganisches Blaupigment, beispielsweise Eisenblau, Ultramarinblau, Kobaltblau oder Mischphasenblaupigment, oder organisches Blaupigment, beispielsweise Phthalocyaninblau oder Indanthrenblau, eingesetzt werden.

Als Kohlenstoffmaterial kann Ruß, Graphitpulver, Graphitfasern, Kohlenstofffasern, Kohlenstofffibrillen, Kohlenstoffnanoröhren (Carbon Nanotubes), Aerogele, Kohlenstoff-Aerogele, Kohlenstoffgewebe, glasartige Kohlenstoffprodukte, Aktivkohle und Fullerene eingesetzt werden.

Als Ruß kann Furnaceruß, Gasruß, Channelruß, Flammruß, Thermalruß, Acetylenruß, Plasmaruß, Inversionsruß, bekannt aus DE 195 21 565, Si-haltige Ruße, bekannt aus WO 98/45361 oder DE 196 13 796, oder metallhaltige Ruße, bekannt aus WO 98/42778, Lichtbogenruß und Ruße, die Nebenprodukte chemischer Produktionsprozesse sind, eingesetzt werden.

Das Pigment kann durch vorgelagerte Reaktionen aktiviert werden. Das Pigment kann ein nichtoxidierter Ruß sein.

Es können Kohlenstoffmaterialien, die als Verstärkerfüllstoff in Kautschukmischungen verwendet werden, eingesetzt werden. Es können Farbruße eingesetzt werden. Weitere Kohlenstoffmaterialien können sein: Leitfähigkeitsruß, Kohlenstoffmaterial zur UV-Stabilisierung, Kohlenstoffmaterial als Füllstoff in anderen Systemen als Kautschuk, wie zum Beispiel in Bitumen oder Kunststoff, oder Kohlenstoffmaterial als Reduktionsmittel in der Metallurgie.

Das Gewichtsverhältnis von Pigment zu oxidiertem Ruß kann 0,5 bis 0,1, vorzugsweise 0,3 bis 0,2, betragen.

Der Gehalt an Pigment und oxidiertem Ruß kann 1 bis 7 Gew.-%, vorzugsweise 3 bis 5 Gew.-%, bezogen auf die Ink Jet Tinte, betragen.

Der Gehalt an oxidiertem Ruß kann 0,5 bis 5,6 Gew.-%, vorzugsweise 3,5 bis 6,3 Gew.-%, bezogen auf die Ink Jet Tinte, betragen.

Der Pigmentgehalt kann 0,05 bis 2,8 Gew.-%, vorzugsweise 0,1 bis 1,5 Gew.-%, bezogen auf die Ink Jet Tinte, betragen.

Die erfindungsgemäße Ink Jet Tinte kann Netzmittel enthalten oder netzmittelfrei sein.

Als Netzmittel können anionische, kationische und/oder nichtionische Netzmittel verwendet werden.

Als anionisches Netzmittel kann NaphthalinsulfonsäureKondensat, beispielsweise Tamol, oder Ligninsulfonat, beispielsweise Vanisperse CB, verwendet werden.

Als kationisches Netzmittel kann kationisches Fettester, beispielsweise Akypoquat 132 der Firma Kao Chemicals GmbH, quartenäre Fluoralkylammoniumiodid, beispielsweise Bayowet FT 738 VP AC 2023 der Firma Bayer AG, kationische Homopolymere, beispielsweise DP2-7949, der Firma Ciba Geigy Chemicals, kationische Polymere, beispielsweise DP7-7961, DP7-7962 oder DP7-7963 der Firma Ciba Geigy Chemicals, Phosphatidylcholin, beispielsweise Epikuron 200 der Firma Lukas Meyer, etoxyliertes Fettamin, beispielsweise Ethoxamine SF 11 und Ethoxamine SF 15 der Firma Witco, Carbonsäure-Diamin-Zubereitung, beispielsweise Forbest 610 der Firma Lukas Meyer, kationische Kondensationsharze, beispielsweise Magnafloc 1797 der Firma Ciba Speciality Chemicals, Dimethyl-C 12/14-alkylbenzylammoniumchlorid, beispielsweise Protectol KLC 50 der Firma BASF, Cocospentaethoxymethylammoniummethosulfat, beispielsweise Rewoquat CPEM der Firma Witco Surfactants GmbH, Ricinolsäure propylamido trimethylammonium methosulfat, beispielsweise Rewoquat RTM 50 der Firma Witco Surfactans GmbH, Alkylimidazolin, beispielsweise Sochamine 35 der Firma Witco Surfactans GmbH, eingesetzt werden.

Als nichtionisches Netzmittel kann eine Verbindung aus der Gruppe vernetzte Polyoxyethylenacrylsäure, Fettalkoholoxethylate, Nonylphenolpolyglycolether, Polyvinylpyrolidon, Glycerolfettsäureester, Propylenglykolfettsäureester, Sorbitanfettsäureester, Polyoxyethylensorbitanfettsäureester, Tetraoleinsäurepolyoxyethylensorbitol, Polyoxyethylenalkylether, Polyoxyethylenalkylphenylether, Polyoxyethylenpolyoxypropylenglykol, Polyoxyethylenpolyoxypropylenalkylether, Polyethylenglycolfettsäureester, höhere Fettsäurealkoholester, Polyhydricalkoholfettsäureester, eingesetzt werden.

Die erfindungsgemäße Ink Jet Tinte kann mindestens ein Lösungsmittel enthalten. Das Lösungsmittel kann Wasser, Alkohole, wie beispielsweise 1,2-Hexandiol, Glykolether, wie beispielsweise Dipropylenglykol, Heterozyklen, wie beispielsweise 2-Pyrrolidon, oder Glyzerin sein.

Die erfindungsgemäße Ink Jet Tinte kann zusätzlich ein oder mehrere Additive enthalten, wie Biozide, Ketone, Glykole, Alkohole oder Gemische der vorgenannten Verbindungen. Diese Additive können auf spezielle Anwendungen hin zugesetzt werden und zum Beispiel auch aus Monomeren, Oligomeren oder polymeren Verbindungen bestehen. Diese Additive können Verbesserungen von Eigenschaften, wie Dispergiergrad, Lagerstabilität, Gefrierstabilität, Trocknungsverhalten, Filmbildungsvermögen, Vernetzbarkeit und/oder die Anbindung an bestimmte Trägermaterialien, wie Papier, Metall, Glas, Polymere, Fasern, Leder, Holz, Beton oder Kautschuk, bewirken.

Das Biozid kann in Mengen von 0,01 - 1,0 Gew.-% zugesetzt werden. Als Biozid können Isothiazolinon-Derivate, Formaldehydabspalter oder Kombinationsprodukte beider Produktklassen verwendet werden. Beispielsweise können als Biozid Parmetol der Firma Schülke & Mayr, Ebotec der Firma Bode Chemie, Acticide der Firma Thor Chemie oder Proxel der Firma Zeneca eingesetzt werden.

Die erfindungsgemäße Ink Jet Tinte kann einen Farbstoff enthalten.

Als Farbstoffe können Azoverbindungen eingesetzt werden. Die Azoverbindungen können 2-[4-(1-hydroxy-6-phenylamino-3-sulfo-naphthalen-2-ylazo)-6-sulfo-naphthalen-1-ylazo]-5-methyl-benzene-1,4-disulfonic acid, 5-[4-(4-(7-[2-ethoxy-4-(4-methyl-2-sulfo-phenylazo]-6-sulfo-naphthalen-1-ylazo]-8-hydroxy-3,6-disulfo-naphthalen-1-ylamino)-6-phenylsulfanyl-[1,3,5]triazin-2-ylamino]-phenylazo]-2-hydroxy-benzoic acid und tetrasodium-6-amino-4-hydroxy-3-[[7-sulphonato-4-[(4-sulphonatophenyl)azo]-1-naphtyl]azo]naphthalene-2,7-disulphonate, Mordant Blue 13, Mordant Green 17, Direct Black 195, Acid Black 1 oder Acid Black 2 sein.

Die erfindungsgemäße Ink Jet Tinte kann ein dispergierunterstützendes Additiv enthalten. Das dispergierunterstützende Additiv kann in Mengen von 0,1 - 30 Gew.-%, vorzugsweise 0,3 - 10 Gew.-%, bezogen auf die Tinte eingesetzt werden. Das Molekulargewicht des dispergierunterstützenden Additivs kann 1000 bis 20000 g/mol, vorzugsweise 14500 bis 17000 g/mol, sein. Die Säurezahl des dispergierunterstützenden Additivs kann 120 bis 320, vorzugsweise 180 bis 280, sein. Als dispergierunterstützendes Additiv können Styrol-Acrylsäure Copolymere verwendet werden. Die Copolymere können statistische, alternierende, Block- oder Pfropfcopolymere sein. Beispielsweise kann als dispergierunterstützendes Additiv Joncryl 678, Joncryl 680, Joncryl 682 oder Joncryl 690 der Firma Johnson Polymer B.V. eingesetzt werden. Als dispergierunterstützendes Additiv können vollständig Ammonium- oder Alkalihydroxid-neutralisierte Formen, insbesondere NaOH neutralisierte Formen, der Styrol-Acrylsäure Copolymere verwendet werden.

Ein weiterer Gegenstand der Erfindung ist ein Verfahren zur Herstellung der Ink Jet Tinte, welches dadurch gekennzeichnet ist, dass man das Pigment in mindestens einem Lösungsmittel dispergiert, anschließend den ozon oxidierten Ruß mit einem Flüchtigengehält von 10% bis 30% zugibt und nochmals dispergiert.

Zur Dispergierung des Pigments kann ein Netzmittel zugegeben werden. Zur Dispergierung des oxidierten Rußes kann ein Netzmittel zugegeben werden.

Die Dispergierung kann mit Perlmühlen, Ultraschall-Geräte, Flügelrührer, Dissolver oder ein Ultra-Turrax erfolgen. Im Anschluß an die Dispergierung kann die Tinte zentrifugiert oder gefiltert werden.

Zur Einstellung eines sauren pH-Wertes der Tinte können anorganische Säuren, vorzugsweise Salzsäure, verwendet werden. Der pH-Wert der Tinte kann 7 bis 12, vorzugsweise 8 bis 10, sein.

Die erfindungsgemäße Tinte kann zum Bedrucken von Papier, Metall, Folien, Textilien oder Glas verwendet werden.

Ein weiterer Gegenstand der Erfindung ist ein Verfahren zur Verbesserung des Ausblutens bei Ink Jet Tinten, welches dadurch gekennzeichnet ist, dass die Tinte mindestens ein Pigment und mindestens einen ozon oxidierten Ruß mit einem Flüchtigengehält von 10% bis 30% enthält.

Die erfindungsgemäße Ink Jet Tinte hat den Vorteil, dass das Ausbluten gegenüber dem Stand der Technik verbessert ist bei gleichzeitig guter optischer Dichte.

### Beispiele

### 1. Vorbereitung der Suspension

Alle Bestandteile außer dem Pigment und dem oxidierten Ruß werden in einem Behälter vorgelegt und unter Rühren homogenisiert. Das Pigment wird in die Lösung unter langsamen Rühren (entweder von Hand oder mit langsamen Rührwerk) nach und nach eingearbeitet.

### 2. Dispergierung

Die in Punkt 1 vorbereitete Suspension wird mit einem Ultraschallgerät dispergiert. Anschließend wird die Menge an oxidierten Ruß nach und nach eingearbeitet und erneut dispergiert. In der Zentrifuge können sehr grobe Teilchen von der erhaltenen Suspension abgetrennt werden.
In Tabelle 1 sind die Zusammensetzungen und Eigenschaften der hergestellten Suspensionen dargestellt.

**Tabelle 1:**

| | | Suspension 1 | Suspension 2 | Suspension 3 | Suspension 4 |
|---|---|---|---|---|---|
| Printex U | % | 15,0 | 15,0 | - | 2,8 |
| Printex U ozonoxidiert | % | - | - | 15,0 | 12,2 |
| Direct Black 195 | % | - | 1,0 | - | 0,2 |
| Acticide MBS | % | 0,3 | 0,3 | 0,3 | 0,3 |
| DMEA | | eingestellt auf pH-Wert von 9,0 | | | |
| VE-Wasser | % | 84,7 | 84,7 | 84,8 | 84,5 |
| | | | | | |
| Konsistenz | | fest | flüssig | flüssig | flüssig |
| Dispergiergrad lichtmikroskopisch | | nicht anwendbar | gut | gut | gut |

Als Pigment wird der Gasruß Printex U eingesetzt. Printex U ist ein nichtoxidierter Gasruß der Evonik Degussa GmbH mit einer Primärteilchengröße von 25 nm. Direkt Black 195 ist ein Azofarbstoff der Firma FujiFilm Imaging Colorants. DMEA ist Dimethylaminoethanol der Firma Merck. Als oxidierter Ruß wird der ozonoxidierte Printex U, ozonoxidiert gemäß EP 0 969 052, eingesetzt. Die Suspension 1 kann auf Grund der festen Konsistenz nicht zur Tinte weiterverarbeitet werden.

### 3. Herstellung der Inkjet Tinte und Eindosierung des oxidierten Rußes

Es wird eine Vormischung aus allen Tintenadditiven und Lösemitteln unter Rühren hergestellt. Die erhaltene Vormischung wird unter langsames Rühren zur erhaltenen Suspension aus Punkt 2 vorsichtig zugegeben. In der Zentrifuge können sehr grobe Teilchen von der erhaltenen Suspension abgetrennt werden.

In Tabelle 2 sind die Zusammensetzungen und Eigenschaften der Referenztinten und der erfindungsgemäßen Tinte basierend auf Pigment und oxidierten Ruß dargestellt.

Die lichtmikroskopische Untersuchung des Dispergiergrades erfolgte bei 500 facher Vergrößerung. Es können Grobpartikel > 1 µm gut erkannt werden.

### Bewertungsskala:

Sehr gut: keine Grobanteile > 1 µm
Gut: sehr wenige Grobanteile > 1 µm
Schlecht: viele Grobanteile > 1 µm

**Tabelle 2:**

| | | Referenztinte 1 | Referenztinte 2 | erfindungsgemäße Tinte 1 |
|---|---|---|---|---|
| Suspension 2 | % | 30,0 | - | - |
| Suspension 3 | % | - | 30,0 | - |
| Suspension 4 | % | - | - | 30,0 |
| 1,2-Propandiol | % | 6,0 | 6,0 | 6,0 |
| 1-Methoxy-2-Propanol | % | 5,0 | 5,0 | 5,0 |
| Dipropylenglycol | % | 3,0 | 3,0 | 3,0 |
| PEG 10000 | % | 0,6 | 0,6 | 0,6 |
| IDIS@solv.hd | % | 1,6 | 1,6 | 1,6 |
| DMEA | | auf pH von 8,5 eingestellt | | |
| VE-Wasser | % | 53,8 | 53,81 | 53,8 |
| Druckversuche mit Canon-S750 Bürodrucker | | | | |
| optische Dichte auf Kopierpapier Inapa Tecno Office | | 1,49 | 1,25 | 1,47 |
| optische Dichte auf Inkjet Papier Canon HR-101 | | 1,53 | 1,35 | 1,50 |
| Intercolor Bleeding auf Kopierpapier Inapa Copy | | 3 | 1 | 1 |
| Intercolor Bleeding auf Kopierpapier Kompass Copy Papier | | 3 | 1 | 1 |

1,2-Propandiol wird von der Firma Sigma Aldrich vertrieben. 1-Methoxy-2-propanol, Dipropylenglykol, PEG 10000 sind Produkte der Firma Merck Schuchhardt und IDIS@ solv.hd ist ein Produkt der Firma Evonik Degussa GmbH.

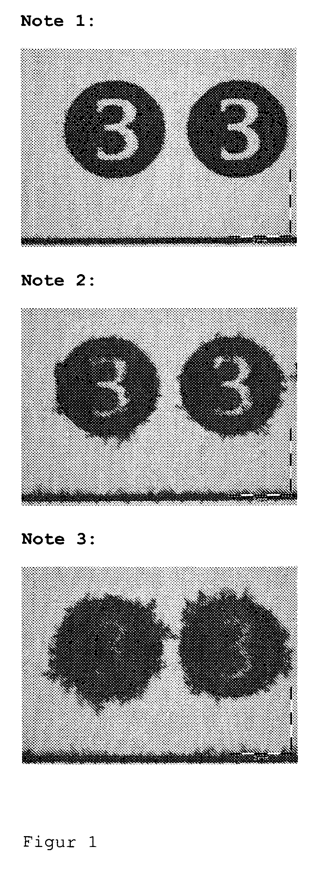

Mit Hilfe eines Inkjet-Offic-Druckers Canon-BJC-S750 werden Druckdemos auf Kopierpapier und Inkjet Papier erstellt. Dazu wird die Tinte vorab unter Vakuum entlüftet und in eine gereinigte Original-Druckerpatrone eingefüllt. Die Druckdemos werden für 24 h bei Raumtemperatur getrocknet. Die optische Dichte wird mit einem Densitometer bestimmt. Das Intercolor Bleeding wird unter dem Stereomikroskop visuell nach der in Figur 1 dargestellten Bewertungsskala beurteilt.

Die erfindungsgemäße Tinte 1 zeigt gegenüber der Referenztinte 1 und 2 ausgezeichnete Ergebnisse in der optischen Dichte auf Kopierpapier und Inkjetpapier als auch ein geringes Intercolor Bleeding.

## Patentansprüche

1. Ink Jet Tinte, **dadurch gekennzeichnet, dass** diese mindestens ein Pigment und mindestens einen ozon oxidierten Ruß mit einem Flüchtigengehalt (DIN53552) von 10% bis 30% enthält.

2. Ink Jet Tinte gemäß Anspruch 1, **dadurch gekennzeichnet, dass** das Gewichtsverhältnis von Pigment zu oxidiertem Ruß 0,5 bis 0,1 ist.

3. Ink Jet Tinte gemäß Anspruch 1-2, **dadurch gekennzeichnet, dass** der Gehalt an oxidiertem Ruß 0,5 bis 5,6 Gew.-% ist.

4. Ink Jet Tinte gemäß Anspruch 1-3, **dadurch gekennzeichnet, dass** der Pigmentgehalt 0,05 bis 2,8 Gew.-% ist.

5. Verfahren zur Herstellung der Ink Jet Tinte gemäß Anspruch 1, **dadurch gekennzeichnet, dass** man das Pigment in mindestens einem Lösungsmittel dispergiert, anschließend den ozon oxidierten Ruß mit einem Flüchtigengehalt (DIN53552) von 10% bis 30% zugibt und erneut dispergiert.

6. Verwendung der Ink Jet Tinte gemäß Anspruch 1 zum Bedrucken von Textilien, Metall, Folien, Glas und Papier.

7. Verfahren zur Verbesserung des Ausblutens bei Ink Jet Tinten, **dadurch gekennzeichnet**, das die Tinte mindestens ein Pigment und mindestens einen ozon oxidierten Ruß mit einem Flüchtigengehalt (DIN53552) von 10% bis 30% enthält.

## Claims

1. Ink jet ink, **characterized in that** it contains at least one pigment and at least one ozone-oxidized carbon black having a volatiles content (DIN53552) in the range from 10% to 30%.

2. Ink jet ink according to Claim 1, **characterized in that** the weight ratio of pigment to oxidized carbon black is in the range from 0.5 to 0.1.

3. Ink jet ink according to Claims 1-2, **characterized in that** the oxidized carbon black content is in the range from 0.5% to 5.6% by weight.

4. Ink jet ink according to Claims 1-3, **characterized in that** the pigment content is in the range from 0.05% to 2.8% by weight.

5. Process for preparing the ink jet ink according to Claim 1, **characterized in that** the pigment is dispersed in at least one solvent, followed by addition of the ozone-oxidized carbon black having a volatiles content (DIN53552) in the range from 10% to 30% and renewed dispersing.

6. Use of the ink jet ink according to Claim 1 for printing textiles, metal, foil, film, sheet, glass and paper.

7. Process for improving intercolour bleeding control of ink jet inks, **characterized in that** the ink contains at least one pigment and at least one ozone-oxidized carbon black having a volatiles content (DIN53552) in the range from 10% to 30%.

## Revendications

1. Encre pour jet d'encre, **caractérisée en ce qu'**elle contient au moins un pigment et au moins un noir de carbone oxydé à l'ozone, ayant une teneur en substances volatiles (DIN 53552) de 10 % à 30 %.

2. Encre pour jet d'encre selon la revendication 1, **caractérisée en ce que** le rapport pondéral du pigment au noir de carbone oxydé est de 0,5 à 0,1.

3. Encre pour jet d'encre selon la revendication 1 ou 2, **caractérisée en ce que** la teneur en noir de carbone oxydé est de 0,5 à 5,6 % en poids.

4. Encre pour jet d'encre selon l'une quelconque des revendications 1 à 3, **caractérisée en ce que** la teneur en pigment est de 0,05 à 2,8 % en poids.

5. Procédé pour la préparation de l'encre pour jet d'encre selon la revendication 1, **caractérisé en ce qu'**on disperse le pigment dans au moins un solvant, puis on y ajoute le noir de carbone oxydé à l'ozone, ayant une teneur en substances volatiles (DIN 53552) de 10 % à 30 %, et on disperse à nouveau.

6. Utilisation de l'encre pour jet d'encre selon la revendication 1, pour l'impression de textiles, métal, films, verre et papier.

7. Procédé pout l'atténuation de la migration dans des encres pour jet d'encre, **caractérisé en ce que** l'encre contient au moins un pigment et au moins un noir de carbone oxydé à l'ozone, ayant une teneur en substances volatiles (DIN 53552) de 10 % à 30 %.
